(19) Europäisches Patentamt
European Patent Office
Office européen des brevets

(11) **EP 4 496 026 A2**

(12) **EUROPEAN PATENT APPLICATION**

(43) Date of publication:
**22.01.2025 Bulletin 2025/04**

(21) Application number: **24189543.2**

(22) Date of filing: **18.07.2024**

(51) International Patent Classification (IPC):
**H01M 4/131** (2010.01)     **H01M 4/485** (2010.01)
**H01M 10/0525** (2010.01)     **H01M 4/02** (2006.01)

(52) Cooperative Patent Classification (CPC):
**H01M 4/485; C01G 33/00; H01M 4/131;**
**H01M 10/0525;** H01M 2004/021; H01M 2220/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.07.2023 JP 2023119262**

(71) Applicant: **Kabushiki Kaisha Toshiba**
**Tokyo 105-0023 (JP)**

(72) Inventors:
• **YAMASHITA, Yasunobu**
**Minato-ku Tokyo, 105-0023 (JP)**
• **KANO, Kento**
**Minato-ku Tokyo, 105-0023 (JP)**
• **HORIKAWA, Hirofumi**
**Minato-ku Tokyo, 105-0023 (JP)**
• **HARADA, Yasuhiro**
**Minato-ku Tokyo, 105-0023 (JP)**
• **TAKAMI, Norio**
**Minato-ku Tokyo, 105-0023 (JP)**

(74) Representative: **Hoffmann Eitle**
**Patent- und Rechtsanwälte PartmbB**
**Arabellastraße 30**
**81925 München (DE)**

(54) **ACTIVE MATERIAL, ELECTRODE, SECONDARY BATTERY, BATTERY PACK, AND VEHICLE**

(57)     According to one approach, provided is an active material that includes a secondary particle (12) containing a plurality of primary particles (11) containing a niobium-containing oxide. The secondary particle (12) includes adjacent sections at which the primary particles (11) are adjacent to each other and necking sections (13) in which the primary particles (11) are joined to each other. A total perimeter L of the primary particles (11) and a sum $L_{cl}$ of perimeters of the primary particles (11) excluding the necking sections (13) satisfy a relationship of $0.1 < (L - L_{cl})/L \leq 0.6$.

F I G. 1

EP 4 496 026 A2

**Description**

FIELD

The present disclosure relates to an active material, electrode, secondary battery, battery pack, and vehicle.

BACKGROUND

Recently, secondary batteries, such as a nonaqueous electrolyte secondary battery like a lithium ion secondary battery, have been actively researched and developed as a high energy-density battery. The secondary batteries, such as a nonaqueous electrolyte secondary battery, are anticipated as a power source for vehicles such as hybrid electric automobiles, electric automobiles, an uninterruptible power supply for base stations for portable telephones, or the like. Therefore, the secondary battery is demanded to, in addition to having a high energy density, be excellent in other performances such as rapid charge-discharge performances and long-term reliability, as well. For example, not only is the charging time remarkably shortened in a secondary battery capable of rapid charge and discharge, but the battery is also capable of improving motive performances in vehicles such as hybrid electric automobiles, and efficient recovery of regenerative energy of motive force.

In order to enable rapid charge/discharge, electrons and lithium ions must be able to migrate rapidly between the positive electrode and the negative electrode. However, when a battery using a carbon-based negative electrode is repeatedly subjected to rapid charge and discharge, precipitation of dendrite of metallic lithium on the electrode may sometimes occur, raising concern of heat generation or ignition due to internal short circuits.

In light of this, a battery using a metal composite oxide in a negative electrode in place of a carbonaceous material has been developed. In particular, in a battery using an oxide of titanium in the negative electrode, rapid charge and discharge can be stably performed. Such a battery also has a longer life than in the case of using a carbon-based negative electrode.

However, compared to carbonaceous materials, oxides of titanium have a higher potential relative to metallic lithium. That is, oxides of titanium are more noble. Furthermore, oxides of titanium have a lower capacity per weight. Therefore, a battery using an oxide of titanium for the negative electrode has a problem that the energy density is low.

For example, an electrode potential of an oxide of titanium is about 1.5 V (vs. Li/Li$^+$) with respect to metallic lithium electrode, which is higher (more noble) compared to potentials of a carbon-based negative electrodes. The potential of an oxide of titanium is electrochemically restricted due to being caused by oxidation-reduction reactions between Ti$^{3+}$ and Ti$^{4+}$ upon insertion and extraction of lithium. In addition, there is also a fact that rapid charge and discharge of lithium ions can be stably performed at a high electrode potential of about 1.5 V (vs. Li/Li$^+$). Therefore, there is difficulty in reducing the electrode potential in order to improve the energy density.

On the other hand, considering the capacity per unit weight, the theoretical capacity of titanium dioxide (anatase structure) is about 165 mAh/g, and the theoretical capacity of spinel lithium-titanium composite oxides such as Li$_4$Ti$_5$O$_{12}$ is about 180 mAh/g. On another hand, the theoretical capacity of a general graphite-based electrode material is 385 mAh/g and greater. As such, the capacity density of an oxide of titanium is significantly lower than that of the carbon-based negative electrode material. This is due to there being few lithium-insertion sites in the crystal structure, and lithium tending to be stabilized in the structure, and thus, substantial capacity being reduced.

In view of the above circumstances, a new electrode material containing Ti and Nb has been studied. The niobium-titanium oxide is expected to have a high charge/discharge capacity. For example, an oxide represented by TiNb$_2$O$_7$ has a high theoretical capacity exceeding 380 mAh/g. However, the electrical conductivity of the niobium-titanium oxide is low, and thus does not excel in output performance.

BRIEF DESCRIPTION OF THE DRAWINGS

FIG. 1 is a cross-sectional view schematically showing a secondary particle of an example of an active material according to an approach.
FIG. 2 is a cross-sectional view schematically showing an example of a secondary particle of a conventional active material.
FIG. 3 is a scanning electron microscope image showing a cross-section of an example of an electrode containing an active material according to an approach.
FIG. 4 is a processed image obtained by binarizing the electron microscope image shown in FIG. 3 and subjecting the binarized image to erode treatment.
FIG. 5 is a processed image obtained by binarizing the electron microscope image shown in FIG. 3 and subjecting the binarized image to closing treatment.

FIG. 6 is a cross-sectional view schematically showing an example of a secondary battery according to an approach.

FIG. 7 is an enlarged cross-sectional view of section A of the secondary battery shown in FIG. 6.

FIG. 8 is a partially cut-out perspective view schematically showing another example of the secondary battery according to an approach.

FIG. 9 is an enlarged cross-sectional view of section B of the secondary battery shown in FIG. 8.

FIG. 10 is a perspective view schematically showing an example of a battery module according to an approach.

FIG. 11 is an exploded perspective view schematically showing an example of a battery pack according to an approach.

FIG. 12 is a block diagram showing an example of an electric circuit of the battery pack shown in FIG. 11.

FIG. 13 is a partially see-through diagram schematically showing an example of a vehicle according to an approach.

FIG. 14 is a diagram schematically showing an example of a control system related to an electric system in the vehicle according to an approach.

## DETAILED DESCRIPTION

According to one approach, provided is an active material that includes a secondary particle containing a plurality of primary particles containing a niobium-containing oxide. The secondary particle includes adjacent sections at which the primary particles are adjacent to each other and necking sections in which the primary particles are joined to each other. A total perimeter L of the primary particles and a sum $L_{cl}$ of perimeters of the primary particles excluding the necking sections satisfy a relationship of $0.1 < (L - L_{cl})/L \leq 0.6$.

According to another approach, provided is an electrode including the active material.

According to another approach, provided is a secondary battery including a positive electrode, a negative electrode including a negative electrode active material, and an electrolyte. The negative electrode active material includes a secondary particle containing a plurality of primary particles containing a niobium-containing oxide. The secondary particle includes first adjacent sections at which the primary particles are adjacent to each other and second adjacent sections at which the primary particles are in contact with each other via each interface thereof. A total perimeter L of the primary particles and a sum $L_{cl}$ of perimeters of the primary particles excluding the second adjacent sections satisfy a relationship of $0.1 \leq (L - L_{cl})/L \leq 0.6$.

According to another approach, provided is a battery pack including the secondary battery.

According to another approach, provided is a vehicle including the battery pack.

According to the above approaches, provided are an active material and electrode that can realize a secondary battery with high output performance that can exhibit superior life performance, a secondary battery and battery pack with high output performance that can exhibit superior life performance, and a vehicle including this battery pack.

The present inventors have found through a hybrid pulse power characteristic (HPPC) test that the active material particle size has a large influence on the overvoltage of a solid-liquid interface and the polarization of lithium (Li) concentration inside an active material, which accounts for a majority of the battery resistance in a battery using a niobium-titanium oxide. Even in a case where the particle size distribution of niobium-titanium oxide particles is normal, the resistance increase due to an active material with a large particle size becomes remarkable. In particular, in a case where the particle size distribution becomes broad, coarse particles are included, and the resistance increase due to the coarse particles becomes more significant.

Hereinafter, approaches will be described with reference to the drawings. The same reference signs are applied to common components throughout the approaches and overlapped explanations are thereby omitted. Each drawing is a schematic view for encouraging explanations of the approach and understanding thereof, and thus there are some details in which a shape, a size and a ratio are different from those in an actual device; they can however be appropriately design-changed, taking into account the following explanations and known technology.

(First Approach)

According to a first approach, an active material is provided. The active material includes a secondary particle containing a niobium-containing oxide. The secondary particle contains a plurality of primary particles. The secondary particle includes adjacent sections at which the primary particles are adjacent to each other and necking sections in which the primary particles are joined to each other. A total perimeter L of the primary particles and a sum $L_{cl}$ of perimeters of the primary particles excluding the necking sections satisfy a relationship of $0.1 < (L - L_{cl})/L \leq 0.6$.

The necking section of the active material corresponds to a grain boundary with higher Li diffusivity than that of the bulk, among the grain boundaries between primary particles . By including the necking section, the active material can exhibit high Li diffusion.

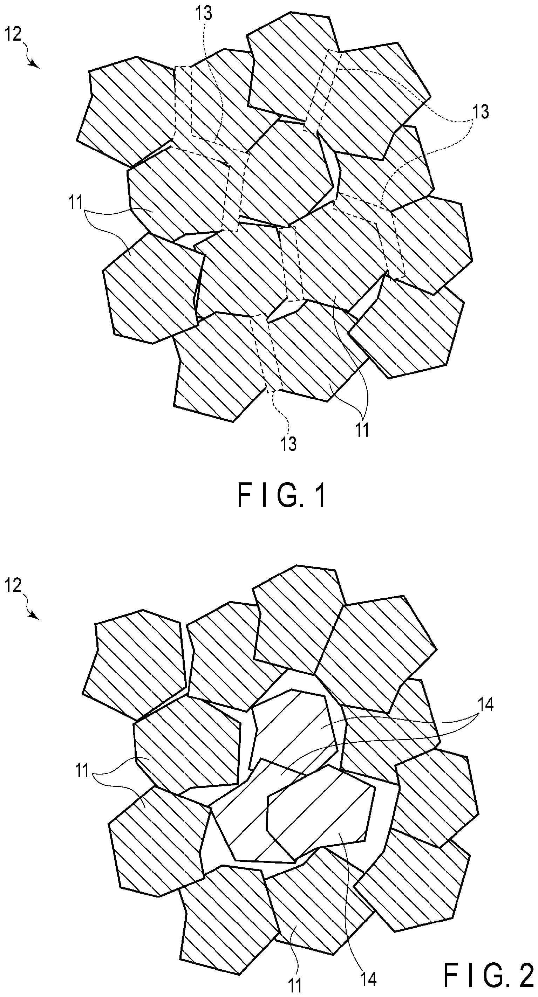

FIG. 1 shows a cross-sectional view schematically showing a secondary particle of an example of the active material. The illustrated secondary particle 12 includes a plurality of primary particles 11, and a part of the primary particles 11 are joined together to form necking sections 13. Due to the presence of the necking sections 13, the Li conductivity and electron conductivity between the primary particles 11 are maintained. Since the primary particles 11 are active material particles containing a niobium-containing oxide, the particles expand and contract due to the charging and discharging of an electrode containing the active material. As a result, although the necking sections 13 crack, the primary particles 11 that had composed the necking sections 13 do not become independent of each other.

The necking ratio N, which indicates the degree of necking by primary particles 11 in the active material, is expressed by the relationship $(L-L_{cl})/L$ between the total perimeter L of primary particles 11 and the sum $L_{cl}$ of perimeters of primary particles 11 excluding the necking sections 13 (that is, $N = (L-L_{cc})/L$). As will be described in detail later, the relationship $(L-L_{cl})/L$ representing the necking ratio N is determined for an observation field(s) of view including 100 or more primary particles 11. In the active material in which the necking structure of primary particles 11 in a secondary particle 12 satisfies the relationship of

$0.1 < (L-L_{cl})/L \leq 0.6$ ($0.1 < N \leq 0.6$), the Li conductivity is hardly impaired. Further, in an electrode containing such an active material, the overvoltage in charging and discharging at a high rate is also low. The range of $(L-L_{cl})/L$ is preferably 0.2 or more and 0.6 or less, and more preferably 0.4 or more and 0.5 or less.

In one conventional attempt to increase electrode capacity, the particle size is reduced, and the electrode density is improved. When the density of an electrode is increased in a state where the particle size is small, primary particles may be compressed as a result of expansion-contraction due to charge and discharge. When fine primary particles are compressed in the electrode, isolated particles are likely to arise at the center of a secondary particle. Since the Li conduction and electron conduction between the isolated particles and other surrounding primary particles become low, the input/output performance is impaired and further the energy density is substantially reduced.

An example is shown in FIG. 2. The illustrated secondary particle 12 includes a plurality of primary particles 11, but does not include necking between the primary particles 11. Further, the center of the secondary particle 12 includes isolated particles 14 that are primary particles isolated from the other primary particles 11. A gap has arisen between the isolated particles 14 and the other primary particles 11 around the isolated particles, and the resistance between the isolated particles 14 and the primary particles 11 is large.

Examples of the niobium-containing oxide include niobium-titanium composite oxides. An example of the niobium-titanium composite oxides is $Nb_2TiO_7$. Although the niobium-containing oxide is not limited thereto, preferably, at least a part of the niobium-containing oxide has a crystal structure having symmetry of a space group C2/m and having atomic coordinates described in the non-patent literature M. Gasperin, Journal of Solid State Chemistry 53, pp144-147 (1984).

The niobium-containing oxide primarily exhibits a monoclinic crystal structure. For example, when lithium ions are inserted into the crystal structure of monoclinic $Nb_2TiO_7$, metal ions that compose the skeleton of the crystal structure are reduced to the trivalent state, whereby the electrical neutrality of the crystal is maintained. In the niobium-titanium oxide, not only are Ti ions reduced from the tetravalent to the trivalent state, but also Nb ions are reduced from the pentavalent to the trivalent state. Therefore, the number of reduced valences per active material weight is large. Therefore, the niobium-titanium composite oxide can maintain the electrical neutrality of the crystal even when many lithium ions are inserted. Thus, the niobium-titanium composite oxide has an energy density higher than that of a compound such as titanium oxide that only contains tetravalent cations. Moreover, the niobium-containing oxide has a lithium insertion potential of about 1.5 V (vs. Li/Li$^+$). Therefore, an electrode including the niobium-containing oxide as an active material can realize a battery in which repeated rapid charge-discharge can be stably performed.

The niobium-containing oxide may be the niobium-titanium oxide. The niobium-titanium oxide may include, for example, at least one crystal phase selected from the group consisting of $Nb_2TiO_7$, $Nb_2Ti_2O_9$, $Nb_{10}Ti_2O_{29}$, $Nb_{14}TiO_{37}$, and $Nb_{24}TiO_{62}$. The niobium-titanium oxide may be a substituted niobium-titanium oxide in which at least a part of Nb and/or Ti is substituted with a different element. Examples of the substituting element include Na, K, Ca, Co, Ni, Si, P, V, Cr, Mo, Ta, Zr, Mn, Fe, Mg, B, Pb, and Al. The substituted niobium-titanium oxide may contain one substituting element, or contain two or more substituting elements. The active material particles may include one species of niobium-titanium oxide, or include plural species of niobium-titanium oxides. The niobium-titanium oxide preferably includes the monoclinic niobium-titanium oxide $Nb_2TiO_7$. In this case, as described above, an electrode having excellent capacity and rate performance can be obtained.

Examples of the monoclinic niobium-titanium oxide include a compound represented by $Li_xTi_{1-y}M1_yNb_{2-z}M2_zO_{7+\delta}$. Here, M1 is at least one selected from the group consisting of Zr, Si, and Sn. M2 is at least one selected from the group consisting of V, Ta, and Bi. Subscripts in the composition formula satisfy $0 \leq x \leq 5$, $0 \leq y < 1$, $0 \leq z < 2$, and $-0.3 \leq \delta \leq 0.3$.

Other examples of the monoclinic niobium-titanium oxide include a compound represented by $Ti_{1-y}M3_{y+z}Nb_{2-z}O_{7-\delta}$. Here, M3 is at least one selected from Mg, Fe, Ni, Co, W, Ta, and Mo. Subscripts in the composition formula respectively satisfy $0 \leq y < 1$, $0 \leq z < 2$, and $-0.3 \leq \delta \leq 0.3$.

The active material may be just particles containing the niobium-containing oxide, or the active material may include an active material other than the particles containing the niobium-containing oxide. The content of the particles containing the niobium-containing oxide in the active material is preferably in a range of 75% by weight to 100% by weight. The content of the particles containing the niobium-containing oxide in the active material is preferably closer to 100% by weight.

Examples of the active material (second active material) other than the niobium-containing oxide include lithium titanate having a ramsdellite structure (e.g., $Li_{2+y}Ti_3O_7$, $0 \leq y \leq 3$), lithium titanate having a spinel structure (e.g., $Li_{4+x}Ti_5O_{12}$, $0 \leq x \leq 3$), monoclinic titanium dioxide ($TiO_2$ (B)), anatase titanium dioxide, rutile titanium dioxide, a hollandite titanium composite oxide, and an orthorhombic titanium-containing composite oxide.

Examples of the orthorhombic titanium-containing composite oxide include a compound represented by $Li_{2+a}M^I_{2-b}Ti_{6-c}M^{II}_dO_{14+\sigma}$. Here, $M^I$ is at least one selected from the group consisting of Sr, Ba, Ca, Mg, Na, Cs, Rb, and K. $M^{II}$ is at least one selected from the group consisting of Zr, Sn, V, Nb, Ta, Mo, W, Y, Fe, Co, Cr, Mn, Ni, and Al. Subscripts in the composition formula satisfy $0 \leq a \leq 6$, $0 \leq b < 2$, $0 \leq c < 6$, $0 \leq d < 6$, and $-0.5 \leq \sigma \leq 0.5$. Specific examples of the orthorhombic titanium-containing composite oxide include $Li_{2+a}Na_2Ti_6O_{14}$ ($0 \leq a \leq 6$).

The average particle size of the primary particles including the niobium-containing oxide is preferably in a range of 0.5 μm to 3 μm, and more preferably in a range of 0.5 um to 2 μm. With the average particle size of 0.5 um or more, the electrode density is increased, whereby the contact area between the active material particles in the electrode and the contact area between the active material particles and the electro-conductive agent can be improved to improve the life performance. In addition, the reaction between the particles containing the niobium-containing oxide and the electrolyte can be suppressed, whereby the rapid charge-and-discharge performance can be improved. With the average particle size (D50) of 3 μm or less, the in-solid diffusion distance of Li ions is suitable, whereby the rapid charge-discharge performance be improved. A method for measuring the average particle size will be described later.

The crystallite size of the particles containing the niobium-containing oxide is, for example, within a range of 10 nm to 300 nm, preferably within a range of 50 nm to 200 nm, and more preferably within a range of 80 nm to 120 nm. When the crystallite size is within this range, Li ion conduction within the crystal proceeds smoothly, whereby charge-discharge efficiency and rate performance can be improved.

<Production Method>

The active material can be produced by the following method.

First, starting materials are mixed. Taking a niobium-titanium oxide as an example of niobium-containing oxides, oxides or salts containing Li, Ti, or Nb is used as the starting materials therefor. The salt used as the starting material is preferably a salt that decomposes at a relatively low temperature to generate an oxide, such as a carbonate or a nitrate. The particle size of the starting material is preferably in a range of 0.1 um to 10 um, and more preferably in a range of 0.1 μm to 5 μm. This is because when the particle size is less than 0.1 μm, the starting material easily fly in the air during mixing, which is apt to cause composition deviation to occur, and when the particle size is more than 10 μm, an unreacted product is generated.

In addition to the starting material containing constituent elements of the oxide, a material containing at least S is further mixed to form a flux. As the material containing S that can be used for a flux, for example, a sulfate such as sodium sulfate can be used. In addition to the material containing S, a material containing P or a material containing K may be further used together for a flux.

When starting materials are mixed, a Nb source and a Ti source are mixed at a molar ratio that would provide a target composition. The materials for a flux are mixed in an amount in which the molar ratio of each of S, P, and K is 1 or less relative to Nb. The mixed raw materials are subjected to pre-firing at a temperature in a range of 500°C to 1000°C for about 2 hours to 5 hours. The powder after the pre-firing is pulverized for 1 hour with a ball mill, and then the pulverized powder is subjected to main firing. The main firing is performed at a temperature of 1000°C to 1450°C in two or more firing steps over a total period of 10 hours to 40 hours.

After the main firing, the obtained powder is subjected to a pulverizing step. In the pulverizing step, at first, strong pulverization using a roller compactor, a hammer mill or the like is performed. After that, the strongly-pulverized powder is further pulverized for 1 hour to 5 hours using a wet ball mill. At this time, the crystallite size is reduced because the crystallinity of the product reduces. Next, re-heat treatment is performed at a temperature equivalent to the temperature during the main firing. The re-heat treatment is, for example, a heat treatment for 0.5 hours to 5 hours. For the re-heat treatment, it is preferable to use an electric furnace in which the temperature has been raised to a desired temperature in advance. Further, after the re-heat treatment, the powder is preferably rapidly cooled. In this way, the particle growth that would occur when raising and lowering the temperature of the electric furnace can be suppressed. The cooling after the re-heat treatment is preferably performed under such a condition where the temperature of the powder after firing is 100°C or lower within 1 hour from the temperature during the firing.

By performing re-heat treatment, for example, at the same temperature as that during the main firing after performing the pulverizing step including strong pulverization, in such a manner, the reduction in crystallinity due to pulverization is restored, and particles having a large crystallite size can be obtained. By a production method including the strong pulverizing step and the re-heat treating step, active material particles having high crystallinity and a small average primary particle size can be produced.

Further, by using a flux containing at least S, an active material with a necking ratio N in the above-described range can be obtained.

The material used for a flux also affects the growth of particles. When a substance containing S such as a sulfate is used as a flux, the substance has a relatively low melting point and is easily volatilized, so that the effect of the flux can be easily exerted even by firing at a low temperature. In addition, since the substance hardly forms a stable phase that is similar to the parent phase, an impurity phase is hardly generated even if S-flux is present at a high concentration. Correspondingly, since the solubility of a solute is low, the effect of promoting the grain growth is not so high, and the influence of adding a flux on the secondary particle size is low. Therefore, the S-flux can be expected to have an effect such as of promoting the necking of particles.

When P is used as a source material for a flux, a source material such as a phosphate has a high-melting point. Accordingly, in order to obtain a sufficient vapor pressure at which the material can function as a flux in the vicinity of a surface of the active material particle, firing at a relatively high temperature is required. Regarding the solubility of an active material that serves as a solute, due to the existence of energetically stable phosphates of titanium or niobium, starting materials of the negative electrode active material that serves as a solute can be easily dissolved. For this reason, at a high temperature at which the P-flux is sufficiently melted, the effect of promoting the particle growth is high, and the effect of increasing the primary particle size is exerted. Meanwhile, if the P-flux concentration is high, the phosphates are apt to form as impurities, and thus, excessive addition leads to a decrease in the purity of the active material.

Regarding the flux containing K, with a compound having a low melting point such as KCl or $KNO_3$, for example, the same effect as the above S can be obtained. Since the melting point of such a substance tends to be even lower than that of a sulfate, the effect of the flux can be expected at an even lower temperature. Further, since there are many stable phases on the phase diagram of $K_2O-Nb_2O_5$, high solubility in respect of the active material that serves as a solute can be expected. For this reason, the K-flux exhibits a function of promoting grain growth as in the case of the P-flux. In addition, as in the case of the P-flux, a K-containing substance may form as impurities in a case of the K-flux, as well.

Impurities of K and P may form grain boundaries between the crystallites of niobium-containing oxide. The grain boundaries may contain niobium in addition to impurity elements, as in the case of the parent phase. Some of such grain boundaries become necking sections between primary particles. It is desirable that the concentration of the impurity elements at the grain boundaries is 20% or more higher than the concentration in the parent phase. In other words, the purity of the parent phase becomes high due to the impurities remaining in the grain boundaries, and the performance as an active material is improved.

Lithium ions may be inserted into the niobium-titanium oxide synthesized by the above method by charging a battery. Alternatively, as described above, an oxide containing lithium may be synthesized by using a compound containing lithium such as lithium carbonate as a starting material.

Hereinafter, methods for measuring a necking ratio N (relationship $(L-L_{cl})/L$) and the like for the active material of the approach will be described below.

<Measurement of Necking Ratio N>

Quantitative evaluation of necking among the active material can be performed by analyzing a scanning electron microscope (SEM) image of a cross-section of an electrode containing the active material.

The cross-section of an electrode sample is cut out by Ar-ion milling. The cut-out cross-section is observed with a SEM.

The magnification of the SEM image is preferably about 5000 times in the light of the balance between the number of measured particles and the resolution. The total number of particles to be measured should be 100 or more in order to improve the quantitative accuracy. If it is difficult to observe 100 particles with one SEM image, the analysis is performed by observing 100 or more particles in total with a combination of multiple fields of view. For the detection mode, select a method by which the outer peripheries of active material particles can be clearly observed and the distinction between the active material to be measured and the other members is clear from the contrast.

Analysis software such as ImageJ can be used to binarize the obtained SEM image. First, the SEM image is converted to an 8-bit monochrome image, and then a threshold value is set to convert the monochrome image to a binarized image that is displayed only at luminance 0 (black) and luminance 255 (white). For setting the threshold value, it is preferable to use a discriminant analysis method or the like that can set a threshold value maximizing the separation degree. Erode treatment is performed on the obtained binarized image in a state where the active material particles are assigned to luminance 255, whereby a treatment is performed in which each closed region of the observed luminance 255 is shrunk by just one pixel. Thereby, the boundaries of particles can be clarified by eliminating the adjoining of adjacent particles and noise. Particle analysis is performed on the obtained image, and the total number of particles n and the total perimeter L of primary particles are measured. Further, the average particle size D can be calculated by $D = L/n\pi$, assuming that all the particles are perfect circles.

Subsequently, dilate treatment is performed on the image immediately after the original binarization, whereby expansion by just one pixel in each closed region of the observed luminance 255 is performed. After that, erode treatment is performed twice. This closing treatment can fill minute gaps between particles, which have been detected in the original binarized image. After that, particle analysis is performed in the same manner as before, and the total number of particles and the sum $L_{cl}$ of perimeters of primary particles excluding necking sections is measured. $L_{cl}$ represents the total perimeter excluding the necking sections from the total perimeter of primary particles. This is an analysis method utilizing the fact that necking sections in necked active material particles crack by the volume change due to charging and discharging. Mere gaps between particles that are simply adjacent to each other from the beginning, which are different from necking, do not change before and after dilate treatment. Meanwhile, the necking portions are not measured as the perimeter in an image after closing treatment, since closing treatment fills gaps at the necking portions. Accordingly, the $L - L_{cl}$ value (value obtained by subtracting $L_{cl}$ from L) indicates the perimeter reduced by closing treatment, which corresponds to the necked perimeter. Therefore, the ratio N of the necked region of particles is expressed as $N = (L - L_{cl})/L$.

Measurement with a cross-sectional SEM is a measurement in a region in which part of a necking plane is cut out with a nondiscriminatory line, and depending on the region cut out, the length may vary depending on how the necking plane is cut out even on the same necking plane. For this reason, in order to quantify the information corresponding to the total area of the necking region by analysis with a cross-sectional SEM image, analysis is performed for a sufficient number of particles (100 or more particles).

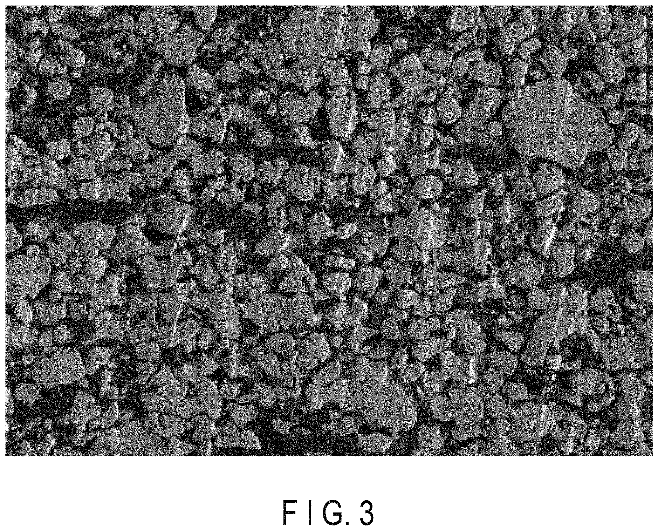

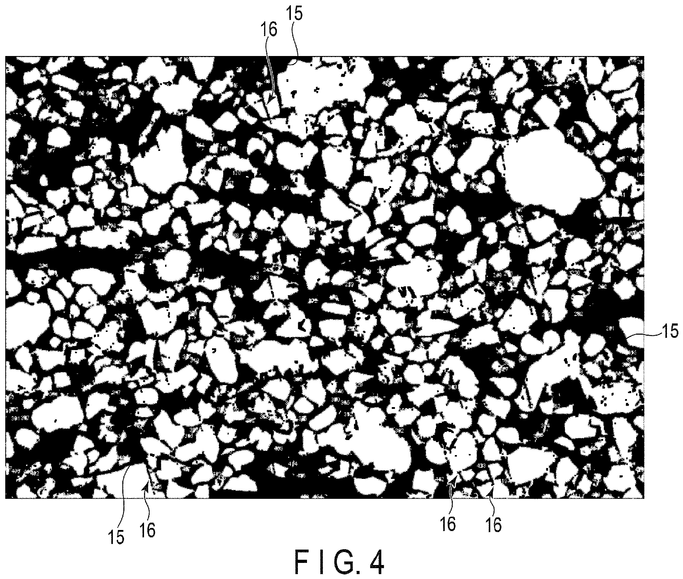

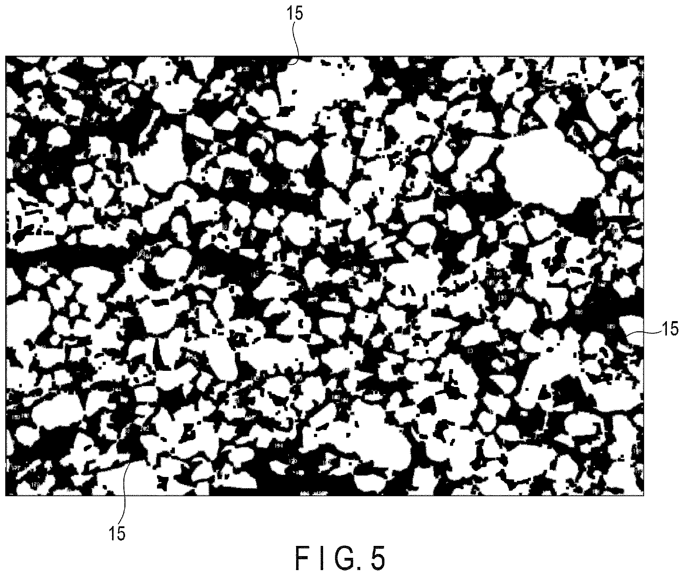

Examples of the cross-sectional SEM image and the processed images are shown in FIGS. 3 to 5. FIG. 3 is an example of a SEM image of a cross-section of an electrode. FIG. 4 is an image obtained by binarizing the SEM image of FIG. 3, and then subjecting the binarized image to erode treatment without performing dilate treatment. FIG. 5 is a processed image obtained by binarizing the SEM image of FIG. 3, and then subjecting the binarized image to dilate treatment and two erode treatments (closing treatment). Boundaries 16 that are observed here and there between particles in FIG. 4 are no longer observed in FIG. 5 after closing treatment. The boundaries 16 that disappear as such by closing treatment correspond to the necking sections in an active material before being charged and discharged. By measuring the total length of outer peripheries 15 of the active material particles in FIG. 4, which also includes the boundaries 16 that correspond to the necking sections, the total perimeter L of primary particles is determined. In FIG. 5, since the portions corresponding to the necking sections is excluded from the outer peripheries 15, the total perimeter $L_{cl}$ excluding the necking sections is determined by measuring the total length of the outer peripheries 15 in FIG. 5.

<Examination of Crystal Structure and Crystallite Size of Active Material>

The crystal structure and crystallite size of the active material can be examined, for example, by combining powder X-ray diffraction (XRD) measurement and analysis by the Rietveld method.

The powder X-ray diffraction measurement of the active material can be performed, for example, as follows.

First, the active material is pulverized as necessary to prepare a sample having an average particle size of less than about 5 $\mu$m. The average particle size can be obtained by the laser diffraction method. The obtained sample is filled in a holder portion formed on a glass sample plate and having a depth of 0.2 mm. Then, another glass plate is used to press from the outside to flatten the surface of the filled sample. Care should be taken to fill the sample in a proper amount so that cracks, voids, irregularities and the like do not occur in the filled sample . Precaution should also be taken to press the glass plate with sufficient pressure. Then, the glass plate filled with the sample is set in a powder X-ray diffractometer, and an XRD pattern is obtained using Cu-K$\alpha$ rays.

When the sample has a nature of high orientation, the position of the peak may be shifted or the peak intensity ratio may differ depending on how the sample is filled. Such a sample having a nature of remarkably high orientation is measured using a capillary. Specifically, the sample is inserted into the capillary, and the capillary is placed on a rotary sample table for measurement. By such a measurement method, the orientation can be alleviated. For the capillary, one made of Lindemann glass is used.

The active material contained in the battery as the electrode material can be measured as follows. First, lithium ions are completely extracted from the active material (for example, niobium-titanium oxide) in the electrode material. For example, when this active material is used for the negative electrode, the battery is put in a fully discharged state. As a result, the crystal's condition for the active material can be observed. Remaining lithium ions may be present even in the discharged state. Due to the influence of the lithium ions remaining in the electrode, impurity phases like lithium carbonate and lithium fluoride may be mixed into the powder X-ray diffraction measurement results. The contamination by the impurity phases can be prevented, for example, by setting the measurement atmosphere to be an inert gas atmosphere or washing the surface of the electrode. Even if the impurity phases are present, analysis can be carried out disregarding those phases.

Next, the battery is dismantled in a glove box filled with argon, and an electrode is taken out. The taken-out electrode is washed with an appropriate solvent. For example, ethyl methyl carbonate or the like can be used. The washed electrode is cut into an area almost equal to the area of the holder of the powder X-ray diffractometer to obtain a measurement sample.

The cut sample (electrode) is directly affixed to the glass holder for measurement. In this case, the position of a peak derived from an electrode substrate such as a metal foil is measured in advance. The peaks of other components such as an electro-conductive agent and a binder are also measured in advance. When the peaks of the substrate and active material overlap, the layer containing the active material (e.g., the later-described active material-containing layer) is desirably removed from the substrate, and subjected to measurement. This is to separate the overlapping peaks when quantitatively measuring the peak intensity. For example, the active material layer can be dislodged by irradiating the electrode substrate with an ultrasonic wave in a solvent. The XRD pattern obtained by this method should be one applicable to Rietveld analysis . In order to collect data for the Rietveld, a step width is set to 1/3 to 1/5 of the minimum half width of diffraction peaks, and a measurement time and/or X-ray intensity are appropriately adjusted so that the intensity at the peak position of highest reflected intensity is 5,000 to 10,000 counts.

The obtained XRD pattern is analyzed by the Rietveld method. In the Rietveld method, a diffraction pattern is calculated from a crystal structure model which has been previously estimated. Parameters (lattice constants, atomic coordinates, occupancy and the like) related to the crystal structure can be precisely analyzed by fitting all the calculated values and measured values. As a result, the characteristics of the crystal structure of the synthesized oxide can be examined. The occupancies in the sites of the respective constitutional elements can be examined, as well.

In order to determine the crystallite diameter (crystallite size), a diffraction peak having the strongest diffraction intensity is selected. For example, in a monoclinic niobium-titanium oxide, the peak of the (110) plane is measured. From the half width of the obtained peak, the crystallite size can be calculated. Here, the crystallite size is calculated from Scherrer equation shown in the following equation.

$$\text{crystallite size (nm)} = \frac{K\lambda}{\beta\cos\theta} \qquad \beta = \sqrt{\beta_e{}^2 - \beta_o{}^2}$$

Here, K = 0.9, $\lambda$ = 0.15406 nm, $\beta$e: half width of the diffraction peak, and $\beta$o: correction value (0.07°) of the half width.

<Method of Examining Composition of Active Material>

The composition of the active material can be analyzed using inductively coupled plasma (ICP) emission spectrometry, for example. At this time, the abundance ratio (molar ratio) of each element depends on the sensitivity of an analyzing apparatus to be used. Therefore, the measured molar ratio may deviate from the actual molar ratio by an error of the measurement apparatus. However, when the numerical value deviates from the actual value and falls within the error range of the analyzing apparatus, the performance of the active material according to the approach can be sufficiently exhibited.

In order to measure the composition of the active material included in the battery according to ICP emission spectrometry, the following procedure is specifically performed.

First, according to the procedure described in the section of powder X-ray diffraction, an electrode containing an active material to be measured is taken out from a secondary battery, and washed. A portion containing the electrode active material, such as the active material-containing layer, is removed from the washed electrode. For example, the portion containing the electrode active material can be dislodged by irradiation with an ultrasonic wave. As a specific example, for example, the active material-containing layer containing the electrode active material can be taken off from an electrode current collector by placing an electrode in ethyl methyl carbonate placed in a glass beaker and vibrating the electrode in an ultrasonic washer.

Next, the removed portion is heated in air for a short time (for example, about 1 hour at 500°C) to burn off unnecessary components such as a later described binder component and electro-conductive agent (e.g., carbon materials) . By dissolving this residue with an acid, a liquid sample containing the active material can be produced. At this time, hydrochloric acid, nitric acid, sulfuric acid, and hydrogen fluoride and the like can be used as the acid. The composition in the active material can be known by subjecting the liquid sample to ICP analysis.

<Method of Examining Impurity Elements>

The concentration of impurity elements in the parent phase of a niobium-containing oxide and at the grain boundaries between crystallites can be measured as follows.

The necking position at the particle interface of the active material is observed with a transmission electron microscope (TEM). The composition of the grain boundaries is quantified with energy dispersive X-ray spectroscopy (EDX), and can be compared with the composition of the parent phase. In this way, impurity elements unevenly distributed towards the grain boundaries can be quantified.

The active material according to the first approach includes secondary particle(s) containing a niobium-containing oxide. The secondary particle (s) contains a plurality of primary particles and includes adjacent sections at which the primary particles are adjacent to each other and necking sections in which the primary particles are joined to each other. A total perimeter L of the primary particles and a sum $L_{cl}$ of perimeters of the primary particles excluding the necking sections satisfy a relationship of $0.1 < (L - L_{cl})/L \leq 0.6$. The active material can provide a secondary battery with high output performance and excellent life performance.

(Second Approach)

According to the second approach, an electrode is provided.

The electrode according to the second approach includes the active material according to the first approach. This electrode may be a battery electrode including the active material according to the first approach as a battery active material. The electrode as the battery electrode may be, for example, a negative electrode including the active material according to the first approach as a negative electrode active material.

The electrode may include a current collector and an active material-containing layer. The active material-containing layer may be formed on both of obverse and reverse surfaces or one surface of the current collector. The active material-containing layer may contain the active material, and optionally an electro-conductive agent and a binder.

The electro-conductive agent is added to improve current collection performance and to suppress the contact resistance between the active material and the current collector. Examples of the electro-conductive agent include carbonaceous substances such as vapor grown carbon fiber (VGCF), carbon blacks such as acetylene black, graphite, carbon nanotubes, and carbon nanofibers. One of these may be used as the electro-conductive agent, or alternatively, two or more may be used in combination as the electro-conductive agent. Alternatively, instead of using an electro-conductive agent, a carbon coating or an electro-conductive inorganic material coating may be applied to the surface of the active material particle.

The binder is added to fill gaps among the dispersed active material and also to bind the active material with the current collector. Examples of the binder include polytetrafluoroethylene (PTFE), polyvinylidene fluoride (PVdF), fluorine rubber, styrene-butadiene rubber, polyacrylate compounds, imide compounds, carboxymethyl cellulose (CMC), and salts of CMC. One of these may be used as the binder, or alternatively, two or more may be used in combination as the binder.

The blending proportions of active material, electro-conductive agent and binder in the active material-containing layer may be appropriately changed according to the use of the electrode. For example, in the case of using the electrode as a negative electrode of a secondary battery, the active material (negative electrode active material), electro-conductive agent and binder are preferably blended in proportions of 68% by mass to 96% by mass, 2% by mass to 30% by mass, and 2% by mass to 30% by mass, respectively. When the amount of electro-conductive agent is 2% by mass or more, the current collection performance of the active material-containing layer can be improved. When the amount of binder is 2% by mass or more, binding between the active material-containing layer and current collector is sufficient, whereby excellent cycling performances can be expected. On the other hand, an amount of each of the electro-conductive agent and binder is preferably 30% by mass or less, in view of increasing the capacity.

There may be used for the current collector, a material which is electrochemically stable at the potential (vs. Li/Li$^+$) at which lithium (Li) is inserted into and extracted from the active material. For example, in the case where the active material is used as a negative electrode active material, the current collector is preferably made of copper, nickel, stainless steel, aluminum, or an aluminum alloy including one or more elements selected from the group consisting of Mg, Ti, Zn, Mn, Fe, Cu, and Si. The thickness of the current collector is preferably from 5 $\mu$m to 20 $\mu$m. The current collector having such a thickness can maintain balance between the strength and weight reduction of the electrode.

The current collector may include a portion where the negative electrode active material-containing layer is not formed on a surface thereof. This portion may serve as a negative electrode current collecting tab.

The electrode may be fabricated by the following method, for example. First, active material, electro-conductive agent, and binder are suspended in a solvent to prepare a slurry. The slurry is applied onto one surface or both of obverse and reverse surfaces of a current collector. Next, the applied slurry is dried so as to obtain a stack of active material-containing layer and current collector. Then, the stack is subjected to pressing. The electrode can be fabricated in this manner.

Alternatively, the electrode may also be fabricated by the following method. First, active material, electro-conductive agent, and binder are mixed to obtain a mixture. Next, the mixture is formed into pellets. Then the electrode can be obtained by arranging the pellets onto the current collector.

The electrode according to the second approach includes the active material according to the first approach. Thus, the electrode can realize a secondary battery with high output performance and excellent life performance.

(Third Approach)

According to a third approach, there is provided a secondary battery including a positive electrode, a negative electrode that includes a negative electrode active material, and an electrolyte. The negative electrode active material includes a secondary particle containing a plurality of primary particles containing a niobium-containing oxide. The secondary particle includes first adjacent sections at which the primary particles are adjacent to each other and second adjacent sections at which the primary particles are in contact with each other via each interface thereof. A total perimeter $L$ of the primary particles and a sum $L_{cl}$ of perimeters of the primary particles excluding the second adjacent sections satisfy a relationship of $0.1 \leq (L - L_{cl})/L \leq 0.6$.

The secondary battery may be a battery that includes the electrode according to the second approach as the negative electrode. That is, the secondary battery according to the third approach may be a battery that includes as the negative electrode, an electrode including the active material according to the first approach as a battery active material. However, as explained in the first approach, the necking sections in the active material crack due to volume change by charge and discharge. Namely, the second adjacent sections correspond to sections where the necking had cracked. The first adjacent sections correspond to sections where primary particles had been adjacent from before the necking cracked. The above relationship formula $(L - L_{cl})/L$ represents the proportion of the second adjacent sections, and coincides with the necking ratio N. The measuring method for $(L - L_{cl})/L$ is the same as that explained previously.

The secondary battery may further include a separator provided between the positive electrode and the negative electrode. The negative electrode, the positive electrode, and the separator may configure an electrode group. The electrolyte may be held in the electrode group.

The secondary battery may further include a container member that houses the electrode group and the electrolyte.

The secondary battery may further include a negative electrode terminal electrically connected to the negative electrode and a positive electrode terminal electrically connected to the positive electrode.

The secondary battery may be, for example, a lithium secondary battery. The secondary battery also includes nonaqueous electrolyte secondary batteries including nonaqueous electrolyte(s).

Hereinafter, the negative electrode, positive electrode, electrolyte, separator, container member, negative electrode terminal, and positive electrode terminal will be described in detail.

1) Negative Electrode

The negative electrode may include a negative electrode current collector and a negative electrode active material-containing layer. The negative electrode current collector and the negative electrode active material-containing layer may respectively be the current collector and active material-containing layer that may be included in the electrode according to the second approach. The negative electrode active material-containing layer contains the active material according to the first approach as negative electrode active material.

Of the details of the negative electrode, portions that overlap with the details described in the second approach are omitted.

The density of the negative electrode active material-containing layer (excluding the current collector) is preferably from 1.8 $g/cm^3$ to 2.8 $g/cm^3$. The negative electrode having the density of the negative electrode active material-containing layer within this range is excellent in energy density and ability of holding the electrolyte. The density of the negative electrode active material-containing layer is more preferably from 2.1 $g/cm^3$ to 2.6 $g/cm^3$.

The negative electrode may, for example, be fabricated by the same method as that for the electrode according to the second approach.

2) Positive Electrode

The positive electrode may include a positive electrode current collector and a positive electrode active material-containing layer. The positive electrode active material-containing layer may be formed on one surface or both of obverse and reverse surfaces of the positive electrode current collector. The positive electrode active material-containing layer may include a positive electrode active material, and optionally an electro-conductive agent and a binder.

As the positive electrode active material, for example, an oxide or a sulfide may be used. The positive electrode may singly include one species of compound as the positive electrode active material, or alternatively, include two or more species of compounds in combination. Examples of the oxide and sulfide include compounds capable of having Li and Li ions be inserted and extracted.

Examples of such compounds include manganese dioxide ($MnO_2$), iron oxides, copper oxides, nickel oxides, lithium manganese composite oxides (e.g., $Li_xMn_2O_4$ or $Li_xMnO_2$; $0 < x \leq 1$), lithium nickel composite oxides (e.g., $Li_xNiO_2$; $0 < x \leq 1$), lithium cobalt composite oxides (e.g., $Li_xCoO_2$; $0 < x \leq 1$), lithium nickel cobalt composite oxides (e.g., $Li_xNi_{1-}$

$_y$Co$_y$O$_2$; 0 < x ≤ 1, 0 < y < l), lithium manganese cobalt composite oxides (e.g., Li$_x$Mn$_y$Co$_{1-y}$O$_2$; 0 < x ≤ 1, 0 < y < 1), lithium manganese nickel composite oxides having a spinel structure (e.g., Li$_x$Mn$_{2-y}$Ni$_y$O$_4$; 0 < x ≤ 1, 0 < y < 2), lithium phosphates having an olivine structure (e.g., Li$_x$FePO$_4$; 0 < x ≤ 1, Li$_x$Fe$_{1-y}$Mn$_y$PO$_4$; 0 < x ≤ 1, 0 < y ≤ 1, and Li$_x$CoPO$_4$; 0 < x ≤ 1), iron sulfate (Fe$_2$(SO$_4$)$_3$), vanadium oxides (e.g., V$_2$O$_5$), and lithium nickel cobalt manganese composite oxide (Li$_x$Ni$_{1-y-z}$Co$_y$Mn$_z$O$_2$; 0 < x ≤ 1, 0 < y < 1, 0 < z < 1, y + z < 1).

Among the above, examples of compounds more preferable as the positive electrode active material include lithium manganese composite oxides having a spinel structure (e.g., Li$_x$Mn$_2$O$_4$; 0 < x ≤ 1), lithium nickel composite oxides (e.g., Li$_x$NiO$_2$; 0 < x ≤ 1), lithium cobalt composite oxides (e.g., Li$_x$CoO$_2$; 0 < x ≤ 1), lithium nickel cobalt composite oxides (e.g., Li$_x$Ni$_{1-y}$Co$_y$O$_2$; 0 < x ≤ 1, 0 < y < l), lithium manganese nickel composite oxides having a spinel structure (e.g., Li$_x$Mn$_{2-y}$Ni$_y$O$_4$; 0 < x ≤ 1, 0 < y < 2), lithium manganese cobalt composite oxide (e.g., Li$_x$Mn$_y$Co$_{1-y}$O$_2$; 0 < x ≤ 1, 0 < y < l), lithium iron phosphates (e.g., Li$_x$FePO$_4$; 0 < x ≤ 1), and lithium nickel cobalt manganese composite oxides (Li$_x$Ni$_{1-y-z}$Co$_y$Mn$_z$O$_2$; 0 < x ≤ 1, 0 < y < 1, 0 < z < 1, y + z < 1). The positive electrode potential can be made high by using these positive electrode active materials.

When an ambient temperature molten salt is used as the electrolyte of the battery, it is preferable to use a positive electrode active material including lithium iron phosphate, Li$_x$VPO$_4$F (0 ≤ x ≤ 1), lithium manganese composite oxide, lithium nickel composite oxide, lithium nickel cobalt composite oxide, or a mixture thereof. Since these compounds have low reactivity with ambient temperature molten salts, cycle life can be improved. Details regarding the ambient temperature molten salt are described later.

The primary particle diameter of the positive electrode active material is preferably from 100 nm to 1 μm. The positive electrode active material having a primary particle size of 100 nm or more is easy to handle during industrial production. In the positive electrode active material having a primary particle size of 1 μm or less, in-solid diffusion of lithium ions can proceed smoothly.

The specific surface area of the positive electrode active material is preferably from 0.1 m$^2$/g to 10 m$^2$/g. With the positive electrode active material having a specific surface area of 0.1 m$^2$/g or more, sufficient sites for inserting and extracting Li ions can be secured. The positive electrode active material having a specific surface area of 10 m$^2$/g or less is easy to handle during industrial production, and can secure a good charge and discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluororubber, polyacrylate compounds, imide compounds, carboxymethyl cellulose (CMC), and salts of CMC. One of these may be used as the binder, or alternatively, two or more may be used in combination as the binder.

The electro-conductive agent is added to improve current collection performance and to suppress the contact resistance between the positive electrode active material and the positive electrode current collector. Examples of electro-conductive agent include carbonaceous substances such as vapor grown carbon fiber (VGCF), carbon black such as acetylene black, and graphite. One of these may be used as the electro-conductive agent, or two or more may be used in combination as the electro-conductive agent. The electro-conductive agent may be omitted.

In the positive electrode active material-containing layer, the positive electrode active material and binder are preferably blended in proportions of 80% by mass to 98% by mass, and 2% by mass to 20% by mass, respectively.

When the amount of the binder is 2% by mass or more, sufficient electrode strength can be achieved. The binder may serve as an electrical insulator. Thus, when the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 77% by mass to 95% by mass, 2% by mass to 20% by mass, and 3% by mass to 15% by mass, respectively.

When the amount of the electro-conductive agent is 3% by mass or more, the above-described effects can be expressed. By setting the amount of the electro-conductive agent to 15% by mass or less, the proportion of electro-conductive agent that contacts the electrolyte can be made low. When this proportion is low, decomposition of electrolyte can be reduced during storage under high temperatures.

The positive electrode current collector is preferably an aluminum foil, or an aluminum alloy foil containing one or more selected from the group consisting of Mg, Ti, Zn, Ni, Cr, Mn, Fe, Cu, and Si.

The thickness of the aluminum foil or aluminum alloy foil is preferably from 5 μm to 20 μm, and more preferably 15 μm or less. The purity of the aluminum foil is preferably 99% by mass or more. The amount of transition metal such as iron, copper, nickel, or chromium contained in the aluminum foil or aluminum alloy foil is preferably 1% by mass or less.

The positive electrode current collector may include a portion where a positive electrode active material-containing layer is not formed on a surface thereof. This portion may serve as a positive electrode current collecting tab.

The positive electrode may be fabricated by a method similar to that for the electrode according to the second approach, for example, using a positive electrode active material.

3) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably from 0.5 mol/L to 2.5 mol/L.

Examples of the electrolyte salt include lithium salts such as lithium perchlorate ($LiClO_4$), lithium hexafluorophosphate ($LiPF_6$), lithium tetrafluoroborate ($LiBF_4$), lithium hexafluoroarsenate ($LiAsF_6$), lithium trifluoromethanesulfonate ($LiCF_3SO_3$), lithium bistrifluoromethylsulfonylimide ($LiN(CF_3SO_2)_2$), and mixtures thereof. The electrolyte salt is preferably resistant to oxidation even at a high potential, and most preferably $LiPF_6$.

Examples of the organic solvent include cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC) ; cyclic ethers such as tetrahydrofuran (THF), 2-methyl tetrahydrofuran (2-MeTHF), and dioxolane (DOX) ; linear ethers such as dimethoxy ethane (DME) and diethoxy ethane (DEE); $\gamma$-butyrolactone (GBL), acetonitrile (AN), and sulfolane (SL) . These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, an ambient temperature molten salt (ionic melt) including lithium ions, a polymer solid electrolyte, an inorganic solid electrolyte, or the like may be used as the nonaqueous electrolyte.

The ambient temperature molten salt (ionic melt) indicates compounds among organic salts made of combinations of organic cations and anions, which are able to exist in a liquid state at ambient temperature (15 ° C to 25 °C) . The ambient temperature molten salt includes an ambient temperature molten salt which exists alone as a liquid, an ambient temperature molten salt which becomes a liquid upon mixing with an electrolyte salt, an ambient temperature molten salt which becomes a liquid when dissolved in an organic solvent, and mixtures thereof. In general, the melting point of the ambient temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity. Having Li ion conductivity, as referred to herein, indicates exhibiting a lithium ion conductivity of $1 \times 10^{-6}$ S/cm or more at 25°C. Examples of the inorganic solid electrolyte include oxide solid electrolytes and sulfide solid electrolytes. Specific examples of the inorganic solid electrolyte are described below.

Preferably used as the oxide solid electrolyte is a lithium phosphate solid electrolyte having a NASICON (Sodium (Na) Super Ionic Conductor) structure represented by a general formula $Li_{1+x}M\alpha_2(PO_4)_3$. $M\alpha$ in the above general formula is, for example, one or more selected from the group consisting of titanium (Ti), germanium (Ge), strontium (Sr), zirconium (Zr), tin (Sn), aluminum (Al), and calcium (Ca) . The subscript x is within the range of $0 \leq x \leq 2$.

Specific examples of the lithium phosphate solid electrolyte having the NASICON structure include a LATP compound represented by $Li_{1+x}Al_xTi_{2-x}(PO_4)_3$ where $0.1 \leq x \leq 0.5$; a compound represented by $Li_{1+x}Al_yM\beta_{2-y}(PO_4)_3$ where $M\beta$ is one or more selected from the group consisting of Ti, Ge, Sr, Zr, Sn, and Ca, $0 \leq x \leq 1$, and $0 \leq y \leq 1$; a compound represented by $Li_{1+x}Al_xGe_{2-x}(PO_4)_3$ where $0 \leq x \leq 2$; a compound represented by $Li_{1+x}Al_xZr_{2-x}(PO_4)_3$ where $0 \leq x \leq 2$; a compound represented by $Li_{1+x+y}Al_xM\gamma_{2-x}Si_yP_{3-y}O_{12}$ where $M\gamma$ is one or more selected from the group consisting of Ti and Ge, $0 < x \leq 2$, and $0 \leq y < 3$; and a compound represented by $Li_{1+2x}Zr_{1-x}Ca_x(PO_4)_3$ where $0 \leq x < 1$.

In addition to the above lithium phosphate solid electrolyte, examples of the oxide solid electrolyte include amorphous LIPON compounds represented by $Li_xPO_yN_z$ where $2.6 \leq x \leq 3.5$, $1.9 \leq y \leq 3.8$, and $0.1 \leq z \leq 1.3$ (e.g., $Li_{2.9}PO_{3.3}N_{0.46}$); a compound having a garnet structure represented by $La_{5+x}A_xLa_{3-x}M\delta_2O_{12}$ where A is one or more selected from the group consisting of Ca, Sr, and Ba, $M\delta$ is one or more selected from the group consisting of Nb and Ta, and $0 \leq x \leq 0.5$; a compound represented by $Li_3M\delta_{2-x}L_2O_{12}$ where $M\delta$ is one or more selected from the group consisting of Nb and Ta, L may include Zr, and $0 \leq x \leq 0.5$; a compound represented by $Li_{7-3x}Al_xLa_3Zr_3O_{12}$ where $0 \leq x \leq 0.5$; a LLZ compound represented by $Li_{5+x}La_3M\delta_{2-x}Zr_xO_{12}$ where $M\delta$ is one or more selected from the group consisting of Nb and Ta, and $0 \leq x \leq 2$ (e.g., $Li_7La_3Zr_2O_{12}$); and a compound having a perovskite structure and represented by $La_{2/3-x}Li_xTiO_3$ where $0.3 \leq x \leq 0.7$.

One or more among the above compounds may be used as the solid electrolyte. Two or more of the above solid electrolytes may be used, as well.

4) Separator

The separator may be made of, for example, a porous film or synthetic resin nonwoven fabric including polyethylene (PE), polypropylene (PP), cellulose, or polyvinylidene fluoride (PVdF) . In view of safety, a porous film made of polyethylene or polypropylene is preferred. This is because at a certain temperature, such a porous film melts and can thereby shut off current.

5) Container Member

As the container member, for example, a container made of laminate film or a container made of metal may be used.
The thickness of the laminate film is, for example, 0.5 mm or less, and preferably 0.2 mm or less.
As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.
The wall thickness of the metal container is, for example, 1 mm or less, more preferably 0.5 mm or less, and still more preferably 0.2 mm or less.
The metal container is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.
The shape of the container member is not particularly limited. The shape of the container member may be, for example, flat (thin), prismatic, cylindrical, coin-shaped, or button-shaped. The container member may be appropriately selected depending on battery size and use of the battery.

6) Negative Electrode Terminal

The negative electrode terminal may be made of a material that is electrochemically stable at the Li insertion-extraction potential of the negative electrode active materials mentioned above, and having electrical conductivity. Specific examples of the material for the negative electrode terminal include copper, nickel, stainless steel, aluminum, and aluminum alloy containing at least one selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance between the negative electrode terminal and the negative electrode current collector.

7) Positive Electrode Terminal

The positive electrode terminal may be made of, for example, a material that is electrically stable in the potential range of 3 V to 4.5 V (vs. Li/Li$^+$) relative to the oxidation-reduction potential of lithium, and having electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance between the positive electrode terminal and the positive electrode current collector.
Next, the secondary battery according to the approach will be more concretely described with reference to the drawings.

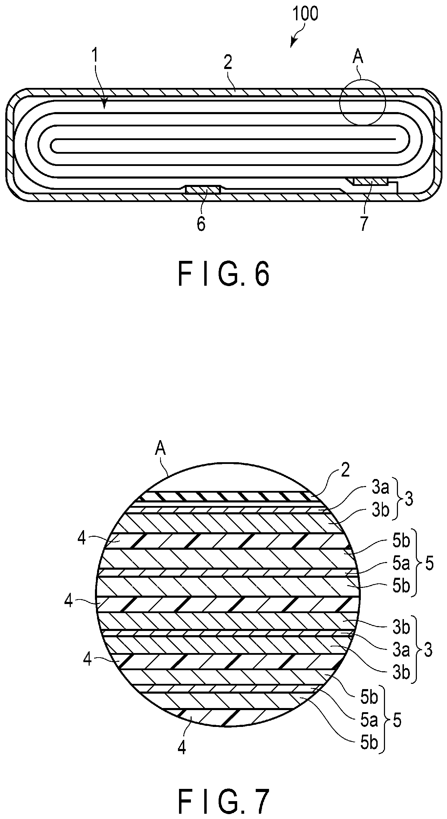

FIG. 6 is a cross-sectional view schematically showing an example of the secondary battery. FIG. 7 is an enlarged cross-sectional view of section A of the secondary battery shown in FIG. 6.
The secondary battery 100 shown in FIGS. 6 and 7 includes a bag-shaped container member 2 shown in FIG. 6, an electrode group 1 shown in FIGS. 6 and 7, and an electrolyte, which is not shown. The electrode group 1 and the electrolyte are housed in the bag-shaped container member 2. The electrolyte (not shown) is held in the electrode group 1.
The bag-shaped container member 2 is made of a laminate film including two resin layers and a metal layer sandwiched between the resin layers.
As shown in FIG. 6, the electrode group 1 is a wound electrode group in a flat form. The wound electrode group 1 in a flat form includes a negative electrode 3, a separator 4, and a positive electrode 5, as shown in FIG. 7. The separator 4 is sandwiched between the negative electrode 3 and the positive electrode 5.
The negative electrode 3 includes a negative electrode current collector 3a and a negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 7. For the other portions of the negative electrode 3, negative electrode active material-containing layers 3b are formed on both of obverse and reverse surfaces of the negative electrode current collector 3a.

The positive electrode 5 includes a positive electrode current collector 5a and positive electrode active material-containing layers 5b formed on both of obverse and reverse surfaces of the positive electrode current collector 5a.

As shown in FIG. 6, a negative electrode terminal 6 and positive electrode terminal 7 are positioned in vicinity of the outer peripheral edge of the wound electrode group 1. The negative electrode terminal 6 is connected to a portion of the negative electrode current collector 3a positioned outermost. The positive electrode terminal 7 is connected to a portion of the positive electrode current collector 5a positioned outermost. The negative electrode terminal 6 and the positive electrode terminal 7 extend out from an opening of the bag-shaped container member 2. A thermoplastic resin layer is provided on the inner surface of the bag-shaped container member 2, and the opening is sealed by heat-sealing the resin layer.

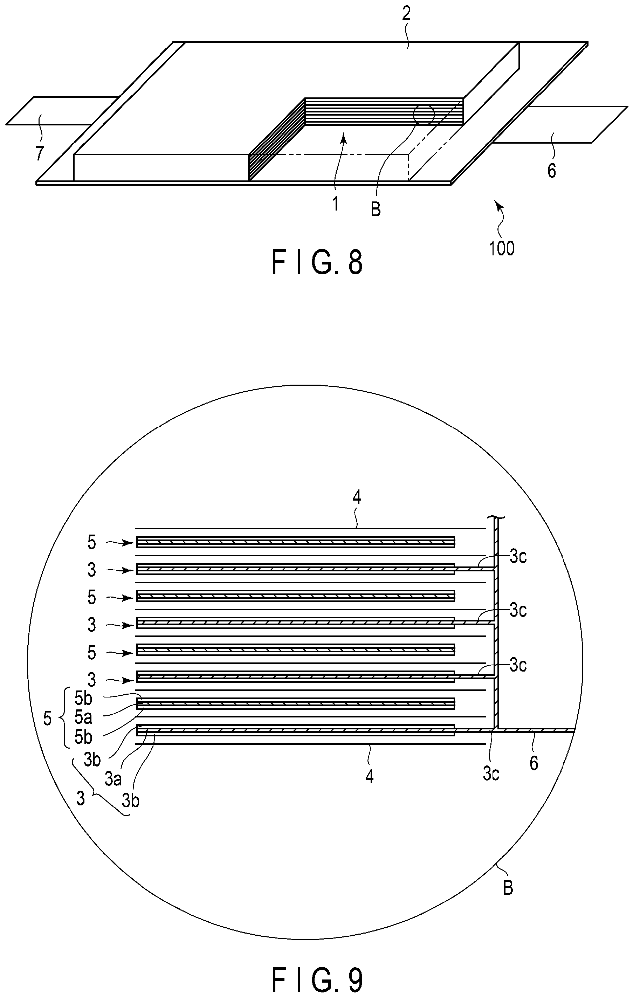

The secondary battery according to the approach is not limited to the secondary battery of the structure shown in FIGS. 6 and 7, and may be, for example, a battery of a structure as shown in FIGS. 8 and 9.

FIG. 8 is a partially cut-out perspective view schematically showing another example of the secondary battery. FIG. 9 is an enlarged cross-sectional view of section B of the secondary battery shown in FIG. 8.

The secondary battery 100 shown in FIGS. 8 and 9 includes an electrode group 1 shown in FIGS. 8 and 9, a container member 2 shown in FIG. 8, and an electrolyte, which is not shown. The electrode group 1 and electrolyte are housed in the container member 2. The electrolyte is held in the electrode group 1.

The container member 2 is made of a laminate film including two resin layers and a metal layer sandwiched between the resin layers.

As shown in FIG. 9, the electrode group 1 is a stacked electrode group. The stacked electrode group 1 has a structure in which negative electrodes 3 and positive electrodes 5 are alternately stacked with separator(s) 4 sandwiched therebetween.

The electrode group 1 includes plural negative electrodes 3. Each of the negative electrodes 3 includes the negative electrode current collector 3a and the negative electrode active material-containing layers 3b supported on both surfaces of the negative electrode current collector 3a. The electrode group 1 further includes plural positive electrodes 5. Each of the positive electrodes 5 includes the positive electrode current collector 5a and the positive electrode active material-containing layers 5b supported on both surfaces thereof.

The negative electrode current collector 3a of each of the negative electrodes 3 includes at one end, a portion where the negative electrode active material-containing layer 3b is not supported on either surface. This portion serves as a negative electrode current collecting tab 3c. As shown in FIG. 9, the negative electrode current collecting tabs 3c do not overlap the positive electrodes 5. The plural negative electrode current collecting tabs 3c are electrically connected to the strip-shaped negative electrode terminal 6. A tip of the strip-shaped negative electrode terminal 6 is drawn outside from the container member 2.

Although not shown, the positive electrode current collector 5a of each of the positive electrodes 5 includes at one end, a portion where the positive electrode active material-containing layer 5b is not supported on either surface. This portion serves as a positive electrode current collecting tab. Like the negative electrode current collecting tabs 3c, the positive electrode current collecting tabs do not overlap the negative electrodes 3. Further, the positive electrode current collecting tabs are located on the opposite side of the electrode group 1 with respect to the negative electrode current collecting tabs 3c. The positive electrode current collecting tabs are electrically connected to the strip-shaped positive electrode terminal 7. A tip of the strip-shaped positive electrode terminal 7 is located on the opposite side relative to the negative electrode terminal 6 and drawn outside from the container member 2.

The secondary battery according to the third approach includes the active material according to the first approach. Thus, the secondary battery has high output performance and excellent life performance.

(Fourth Approach)

According to a fourth approach, a battery module is provided. The battery module includes plural of secondary batteries according to the third approach.

In the battery module, each of the single-batteries may be arranged to be electrically connected in series or in parallel, or may be arranged in combination of in-series connection and in-parallel connection.

An example of the battery module according to the approach will be described next, with reference to the drawings.

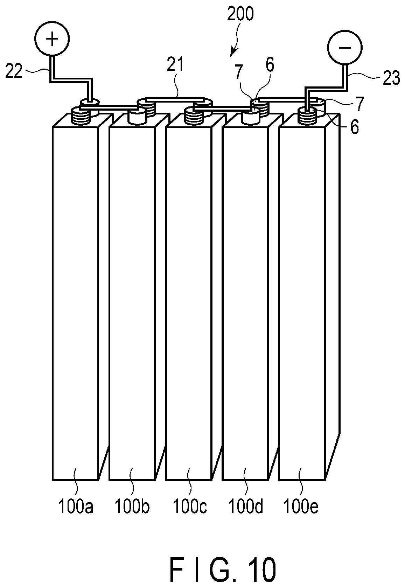

FIG. 10 is a perspective view schematically showing an example of the battery module. The battery module 200 shown in FIG. 10 includes five single-batteries 100a to 100e, four bus bars 21, a positive electrode-side lead 22, and a negative electrode-side lead 23 . Each of the five single-batteries 100a to 100e is the secondary battery according to the third approach.

The bus bar 21 connects, for example, a negative electrode terminal 6 of one single-battery 100a and a positive electrode terminal 7 of the single-battery 100b positioned adjacent. In such a manner, five single-batteries 100 are thus connected in series by the four bus bars 21. That is, the battery module 200 shown in FIG. 10 is a battery module of five-in-series connection. Although no example is depicted in drawing, in a battery module including plural single-batteries that are electrically connected in parallel, for example, the plural single-batteries may be electrically connected by having plural negative electrode terminals being connected to each other by bus bars while having plural positive electrode terminals being connected to each other by bus bars.

The positive electrode terminal 7 of at least one battery among the five single-batteries 100a to 100e is electrically connected to the positive electrode-side lead 22 for external connection. In addition, the negative electrode terminal 6 of at least one battery among the five single-batteries 100a to 100e is electrically connected to the negative electrode-side lead 23 for external connection.

The battery module according to the fourth approach includes the secondary battery according to the third approach. Therefore, the battery module has high output performance and excellent life performance.

(Fifth Approach)

According to a fifth approach, a battery pack is provided. The battery pack includes a battery module according to the fourth approach. The battery pack may include a single secondary battery according to the third approach, in place of the battery module according to the fourth approach.

The battery pack may further include a protective circuit. The protective circuit has a function to control charging and discharging of the secondary battery. Alternatively, a circuit included in equipment where the battery pack serves as a power source (for example, electronic devices, automobiles, and the like) may be used as the protective circuit for the battery pack.

Moreover, the battery pack may further include an external power distribution terminal. The external power distribution terminal is configured to externally output current from the secondary battery, and/or to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the approach will be described with reference to the drawings.

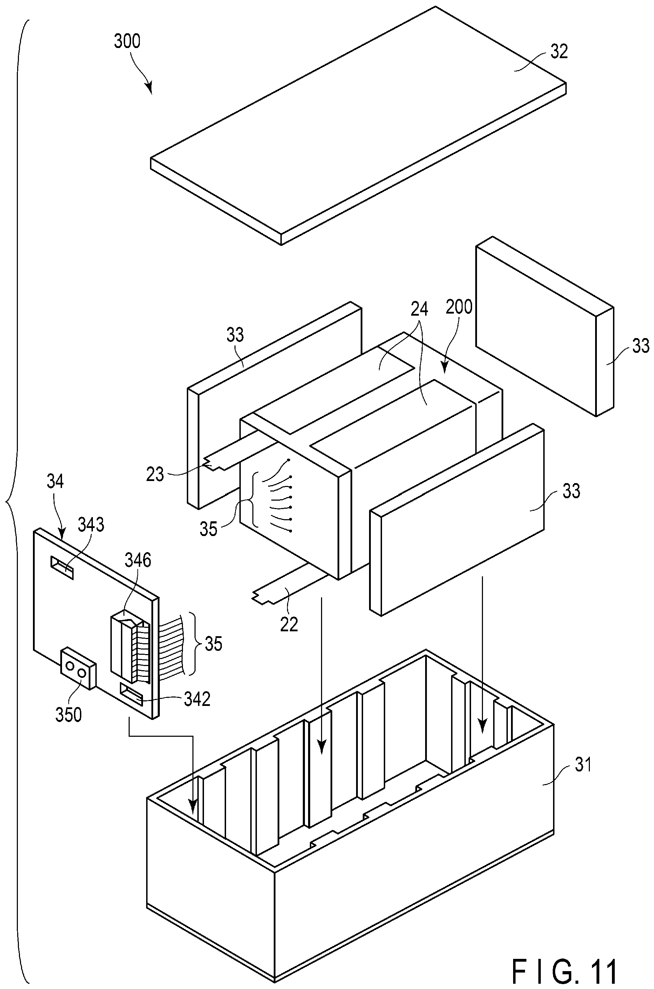

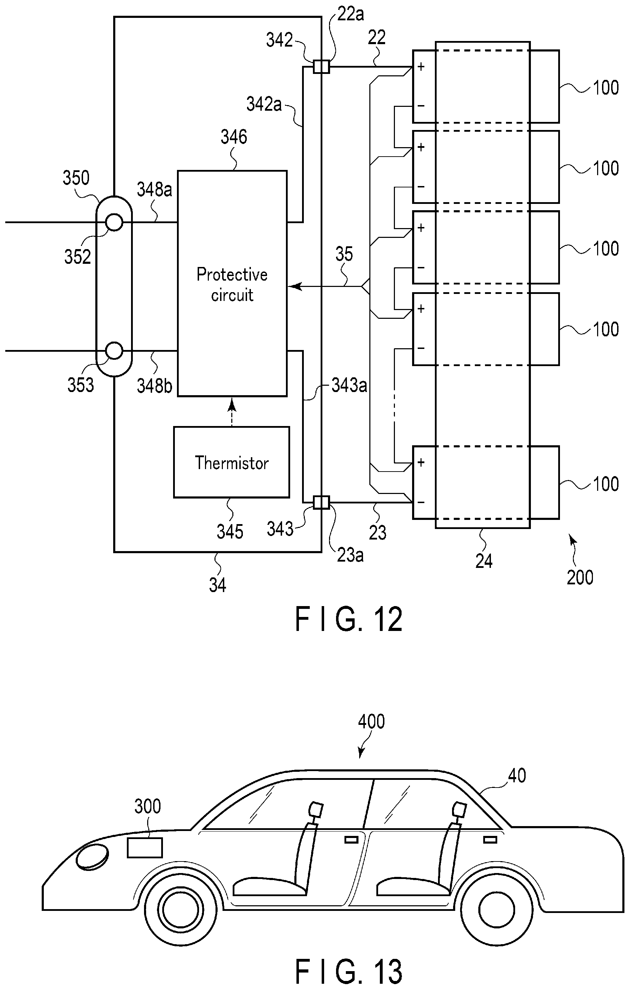

FIG. 11 is an exploded perspective view schematically showing an example of the battery pack. FIG. 12 is a block diagram showing an example of an electric circuit of the battery pack shown in FIG. 11.

A battery pack 300 shown in FIGS. 11 and 12 includes a housing container 31, a lid 32, protective sheets 33, a battery module 200, a printed wiring board 34, wires 35, and an insulating plate (not shown).

The housing container 31 shown in FIG. 11 is a prismatic bottomed container having a rectangular bottom surface. The housing container 31 is configured to be capable of housing the protective sheets 33, the battery module 200, the printed wiring board 34, and the wires 35. The lid 32 has a rectangular shape. The lid 32 covers the housing container 31 to house the battery module 200 and such. Although not illustrated, the housing container 31 and the lid 32 are provided with openings, connection terminals, or the like for connection to an external device or the like.

The battery module 200 includes plural single-batteries 100, a positive electrode-side lead 22, a negative electrode-side lead 23, and adhesive tapes 24.

At least one of the plural single-batteries 100 is a secondary battery according to the third approach. The plural single-batteries 100 are electrically connected in series, as shown in FIG. 12. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tapes 24 fasten the plural single-batteries 100. The plural single-batteries 100 may be fixed using a heat shrinkable tape in place of the adhesive tapes 24. In this case, protective sheets 33 are arranged on both side surfaces of the battery module 200, and the heat shrinkable tape is wound around the battery module 200 and protective sheets 33. After that, the heat shrinkable tape is shrunk by heating to bundle the plural single-batteries 100.

One end of the positive electrode-side lead 22 is connected to the battery module 200. The one end of the positive electrode-side lead 22 is electrically connected to the positive electrode (s) of one or more single-battery 100. One end of the negative electrode-side lead 23 is connected to the battery module 200. The one end of the negative electrode-side lead 23 is electrically connected to the negative electrode (s) of one or more single-battery 100.

The printed wiring board 34 is provided along one face in the short side direction among the inner surfaces of the housing container 31. The printed wiring board 34 includes a positive electrode-side connector 342, a negative electrode-side connector 343, a thermistor 345, a protective circuit 346, wirings 342a and 343a, an external power distribution terminal 350, a plus-side wiring (positive-side wiring) 348a, and a minus-side wiring (negative-side wiring) 348b. One principal surface of the printed wiring board 34 faces a surface of the battery module 200. An insulating plate (not shown) is disposed in between the printed wiring board 34 and the battery module 200.

The other end 22a of the positive electrode-side lead 22 is electrically connected to the positive electrode-side connector 342. The other end 23a of the negative electrode-side lead 23 is electrically connected to the negative electrode-side connector 343.

The thermistor 345 is fixed to one principal surface of the printed wiring board 34. The thermistor 345 detects the temperature of each single-battery 100 and transmits detection signals to the protective circuit 346.

The external power distribution terminal 350 is fixed to the other principal surface of the printed wiring board 34. The external power distribution terminal 350 is electrically connected to device(s) that exists outside the battery pack 300. The external power distribution terminal 350 includes a positive-side terminal 352 and a negative-side terminal 353.

The protective circuit 346 is fixed to the other principal surface of the printed wiring board 34. The protective circuit 346 is connected to the positive-side terminal 352 via the plus-side wiring 348a. The protective circuit 346 is connected to the negative-side terminal 353 via the minus-side wiring 348b. In addition, the protective circuit 346 is electrically connected to the positive electrode-side connector 342 via the wiring 342a. The protective circuit 346 is electrically connected to the negative electrode-side connector 343 via the wiring 343a. Furthermore, the protective circuit 346 is electrically connected to each of the plural single-batteries 100 via the wires 35.

The protective sheets 33 are arranged on both inner surfaces of the housing container 31 along the long side direction and on the inner surface along the short side direction facing the printed wiring board 34 across the battery module 200. The protective sheets 33 are made of, for example, resin or rubber.

The protective circuit 346 controls charge and discharge of the plural single-batteries 100. The protective circuit 346 is also configured to cut-off electric connection between the protective circuit 346 and the external power distribution terminal 350 (positive-side terminal 352, negative-side terminal 353) to external device(s), based on detection signals transmitted from the thermistor 345 or detection signals transmitted from each single-battery 100 or the battery module 200.

An example of the detection signal transmitted from the thermistor 345 is a signal indicating that the temperature of the single-battery(s) 100 is detected to be a predetermined temperature or more. An example of the detection signal transmitted from each single-battery 100 or the battery module 200 include a signal indicating detection of over-charge, over-discharge, and overcurrent of the single-battery(s) 100. When detecting over charge or the like for each of the single batteries 100, the battery voltage may be detected, or a positive electrode potential or negative electrode potential may be detected. In the latter case, a lithium electrode to be used as a reference electrode may be inserted into each single-battery 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may respectively be used as the positive-side terminal 352 and negative-side terminal 353 of the external power distribution terminal 350.

Such a battery pack is used, for example, in applications where excellent cycle performance is demanded when a large current is extracted. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

The battery pack according to the fifth approach is provided with the secondary battery according to the third approach or the battery module according to the fourth approach. Accordingly, the batter pack has high output performance and excellent life performance.

(Sixth Approach)

According to a sixth approach, a vehicle is provided. The battery pack according to the fifth approach is installed on this vehicle.

In the vehicle, the battery pack is configured, for example, to recover regenerative energy from motive force of the vehicle. The vehicle may include a mechanism (a regenerator) configured to convert kinetic energy of the vehicle into regenerative energy.

Examples of the vehicle include two-wheeled to four-wheeled hybrid electric automobiles, two-wheeled to four-wheeled electric automobiles, electrically assisted bicycles, and railway cars.

The installing position of the battery pack within the vehicle is not particularly limited. For example, when installing the battery pack on an automobile, the battery pack may be installed in the engine compartment of the automobile, in rear parts of the vehicle body, or under seats.

Plural battery packs may be installed in the vehicle. In such a case, batteries included in each of the battery packs may be electrically connected to each other in series, electrically connected in parallel, or electrically connected in a combination of in-series connection and in-parallel connection. For example, in a case where each battery pack includes a battery module, the battery modules may be electrically connected to each other in series, electrically connected in parallel, or electrically connected in a combination of in-series connection and in-parallel connection. Alternatively, in a case where each battery pack includes a single battery, each of the batteries may be electrically connected to each other in series, electrically connected in parallel, or electrically connected in a combination of in-series connection and in-parallel connection.

An example of the vehicle is explained below, with reference to the drawings.

FIG. 13 is a partially see-through diagram schematically showing an example of the vehicle.

A vehicle 400, shown in FIG. 13 includes a vehicle body 40 and a battery pack 300 according to the fifth approach. In the example shown in FIG. 13, the vehicle 400 is a four-wheeled automobile.

This vehicle 400 may have plural battery packs 300 installed therein. In such a case, the batteries (e.g., single-batteries or battery module) included in the battery packs 300 may be connected in series, connected in parallel, or connected in a combination of in-series connection and in-parallel connection.

In FIG. 13, depicted is an example where the battery pack 300 is installed in an engine compartment located at the front of the vehicle body 40. As mentioned above, for example, the battery pack 300 may be alternatively installed in rear sections of the vehicle body 40, or under a seat. The battery pack 300 may be used as a power source of the vehicle 400. The battery pack 300 can also recover regenerative energy of motive force of the vehicle 400.

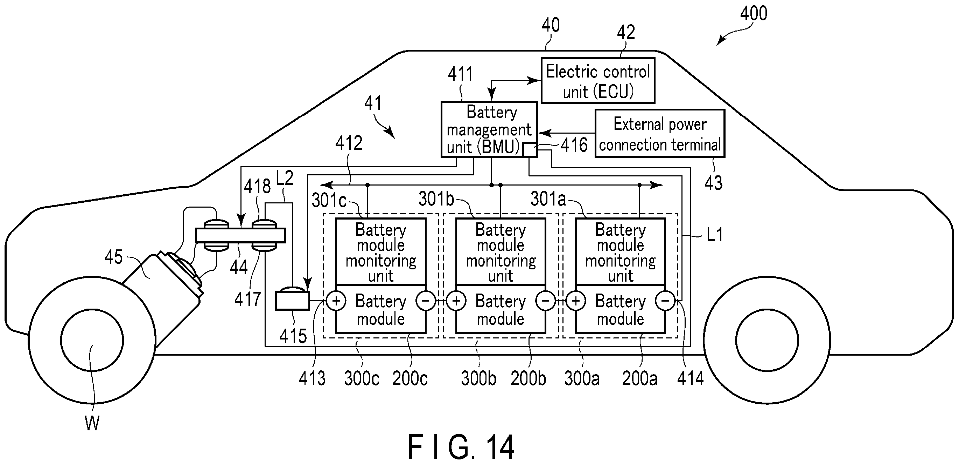

Next, with reference to FIG. 14, an aspect of operation of the vehicle according to the approach is explained.

FIG. 14 is a diagram schematically showing an example of a control system related to an electric system in the vehicle. A vehicle 400, shown in FIG. 14, is an electric automobile.

The vehicle 400, shown in FIG. 14, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 14, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The battery pack 300a includes a battery module 200a and a battery module monitoring unit 301a (e.g., a VTM: voltage temperature monitoring). The battery pack 300b includes a battery module 200b and a battery module monitoring unit 301b. The battery pack 300c includes a battery module 200c and a battery module monitoring unit 301c. The battery packs 300a to 300c are battery packs similar to the aforementioned battery pack 300, and the battery modules 200a to 200c are battery modules similar to the aforementioned battery module 200. The battery modules 200a to 200c are electrically connected in series. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the third approach. The battery modules 200a to 200c each perform charging and discharging via a positive electrode terminal 413 and a negative electrode terminal 414.

The battery management unit 411 performs communication with the battery module monitoring units 301a to 301c and collects information such as voltages or temperatures for each of the single-batteries 100 included in the battery modules 200a to 200c included in the vehicle power source 41. In this manner, the battery management unit 411 collects information concerning security of the vehicle power source 41.

The battery management unit 411 and the battery module monitoring units 301a to 301c are connected via the communication bus 412. In the communication bus 412, a set of communication lines is shared at multiple nodes (i.e., the battery management unit 411 and one or more battery module monitoring units 301a to 301c). The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 14) for switching on and off electrical connection between the positive electrode terminal 413 and the negative electrode terminal 414. The switch unit 415 includes a precharge switch (not shown), which is turned on when the battery modules 200a to 200c are charged, and a main switch (not shown), which is turned on when output from the battery modules 200a to 200c is supplied to a load. The precharge switch and the main switch each include a relay circuit (not shown), which is switched on or off based on a signal provided to a coil disposed near the switch elements . The magnetic contactor such as the switch unit 415 is controlled based on control signals from the battery management unit 411 or the vehicle ECU 42, which controls the operation of the entire vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management unit 411 or the vehicle ECU 42, which controls the entire operation of the vehicle. Due to the inverter 44 being controlled, output voltage from the inverter 44 is adjusted.

The drive motor 45 is rotated by electric power supplied from the inverter 44. The drive generated by rotation of the motor 45 is transferred to an axle and driving wheels W via a differential gear unit, for example.

The vehicle 400 also includes a regenerative brake mechanism (regenerator), though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connecting line L1 is connected to the negative electrode terminal 414 of the vehicle power source 41. The other terminal of the connecting line L1 is connected to a negative electrode input terminal 417 of the inverter 44. A current detector (current detecting circuit) 416 in the battery management unit 411 is provided on the connecting line L1 in between the negative electrode terminal 414 and negative electrode input terminal 417.

One terminal of a connecting line L2 is connected to the positive electrode terminal 413 of the vehicle power source 41. The other terminal of the connecting line L2 is connected to a positive electrode input terminal 418 of the inverter 44. The switch unit 415 is provided on the connecting line L2 in between the positive electrode terminal 413 and the positive electrode input terminal 418.

The external terminal 43 is connected to the battery management unit 411. The external terminal 43 is able to connect, for example, to an external power source.

The vehicle ECU 42 performs cooperative control of the vehicle power source 41, switch unit 415, inverter 44, and the like, together with other management units and control units including the battery management unit 411 in response to inputs operated by a driver or the like. Through the cooperative control by the vehicle ECU 42 and the like, output of electric power from the vehicle power source 41, charging of the vehicle power source 41, and the like are controlled, thereby performing the management of the whole vehicle 400. Data concerning the security of the vehicle power source 41, such as a remaining capacity of the vehicle power source 41, are transferred between the battery management unit 411 and the vehicle ECU 42 via communication lines.

The vehicle according to the sixth approach is installed with the battery pack according to the fifth approach. Thus, the vehicle has high performance and is reliable.

[Examples]

Hereinafter, Examples will be described.

(Example 1)

<Synthesis of Active Material>

First, $Nb_2O_5$ and $TiO_2$, which were commercially available oxide reagents, were prepared. These powders were weighed so that the molar ratio of Nb/Ti was 1.0. Further, $Na_2SO_4$ was added so that the molar ratio of Nb/S was 1:0.1. These were mixed for 1 hour using a ball mill. The obtained mixture was put in an electric furnace, and subjected to pre-firing at a temperature of 1000°C for 12 hours. The powder after the pre-firing was placed in the ball mill apparatus again, and mixed for 1 hour. The mixture was put in the electric furnace again, and first main firing was performed at a temperature of 1100°C for 5 hours. After cooling to room temperature, pulverization with a ball mill was performed for 1 hour, and second main firing was performed at a temperature of 1100°C for 5 hours . The taken-out powder was strongly pulverized using a hammer mill and a roller compactor, and the strongly-pulverized powder was pulverized using a wet ball mill for 3 hours.

The obtained powder was placed in an electric furnace in which the temperature was raised to 1100 °C in advance, and re-heat treated for 1 hour. After that, the powder was immediately taken out from the electric furnace, and put in liquid nitrogen to be cooled. Thus, an active material powder according to Example 1 was obtained.

<Production of Negative Electrode>

The active material powder was mixed with 10 parts by weight of acetylene black (AB) as an electro-conductive agent based on 100 parts by weight of the active material powder. This mixture was dispersed in N-methyl-2-pyrrolidone (NMP), and 10 parts by weight of polyvinylidene fluoride (PVdF) as a binder based on 100 parts by weight of the active material powder was mixed in to produce an electrode slurry. This slurry was applied onto a current collector made of an aluminum foil, and by drying, an electrode having an active material-containing layer applied onto both sides of the aluminum foil was obtained. The obtained electrode was compressed at a predetermined pressing pressure using a roll press apparatus to obtain a negative electrode having an electrode density of 2.3 $g/cm^3$. Next, the negative electrode was punched out so that the electrode area of the active material-containing layer was 100 mm $\times$ 80 mm.

<Production of Positive Electrode>

Using $LiNi_{0.5}CO_{0.2}Mn_{0.3}O_2$ as a positive electrode active material instead of the active material powder obtained by synthesis, electrode production was performed with the same mixing ratio of AB and PVdF as that of the negative electrode to obtain a positive electrode having an electrode density of 2.6 $g/cm^3$. Next, the positive electrode was punched out so that the electrode area of the active material-containing layer was 100 mm $\times$ 80 mm.

<Production of Battery>

Next, the positive electrode produced above, a sheet of separator, the negative electrode, and another sheet of separator were sequentially stacked in this order repeatedly to obtain a stack. By heat-pressing the stack at 90°C, an electrode group having a thickness of 2.0 mm was produced.

The terminals for the positive and negative electrodes were joined to the obtained electrode group. Next, the electrode group was housed in a pack made of laminate film, and vacuum dried at 80°C for 24 hours. The laminate film was configured by forming a polypropylene layer on both sides of an aluminum foil having a thickness of 40 $\mu$m, and the total thickness was 0.1 mm.

A liquid nonaqueous electrolyte was put into the above-mentioned pack of the laminate film housing the electrode group. As the liquid nonaqueous electrolyte, used was a solution in which $LiPF_6$ was dissolved at a concentration of 1 M as an electrolyte salt in a mixture solution in which propylene carbonate (PC) and diethyl carbonate (DEC) were mixed in a volume ratio of 1:1. Thereafter, the pack was completely sealed by heat sealing. In this way, a nonaqueous electrolyte battery having a width of 110 mm, a length of 85 mm, and a thickness of 2.2 mm was produced.

The produced nonaqueous electrolyte battery was charged and discharged in a depth of charge (DOD) range of 25% to 75%. A charge-discharge current value was set to 0.2 C (hourly discharge rate), and a 0.2 C discharge capacity was examined at room temperature. The value of the 0.2 C discharge capacity is an index of the energy density. The capacity of the nonaqueous electrolyte battery produced in Example 1 was 2000 mAh.

(Example 2)

An active material powder was synthesized in the same manner as described in Example 1 except that the amount of $Na_2SO_4$ added was changed so that the molar ratio of Nb/S was 1:0.5, and the active material powder was used for the negative electrode to produce a nonaqueous electrolyte battery.

(Example 3)

An active material powder was synthesized in the same manner as described in Example 1 except that the amount of $Na_2SO_4$ added was changed so that the molar ratio of Nb/S was 1:1, and the active material powder was used for the negative electrode to produce a nonaqueous electrolyte battery.

(Example 4)

An active material powder was synthesized in the same manner as described in Example 1 except that $K_3PO_4$ was added in addition to $Na_2SO_4$ so that the molar ratio of Nb/P was 1: 0.1, and the active material powder was used for the negative electrode to produce a nonaqueous electrolyte battery.

(Comparative Example 1)

An active material powder was synthesized in the same manner as described in Example 1 except that $Na_2SO_4$ to be a flux was not added, and the active material powder was used for the negative electrode to produce a nonaqueous electrolyte battery.

(Comparative Example 2)

An active material powder was synthesized in the same manner as described in Example 1 except that $FePO_4$ was added in place of $Na_2SO_4$ so that the molar ratio of Nb/P was 1:0.5, and the active material powder was used for the negative electrode to produce a nonaqueous electrolyte battery.

(Comparative Example 3)

An active material powder was synthesized in the same manner as described in Example 1 except that KCl was added in place of $Na_2SO_4$ so that the molar ratio of Nb/K was 1:0.5, and the active material powder was used for the negative electrode to produce a nonaqueous electrolyte battery.

(Comparative Example 4)

An active material powder was synthesized in the same manner as described in Example 1 except that the temperature of the re-heat treatment was changed to 1400°C, and the active material powder was used for the negative electrode to produce a nonaqueous electrolyte battery.

<Measurement of Powder X-Ray Diffraction>

For the active material powder obtained in each of the examples, a diffraction pattern was obtained according to the method described in the first approach, and analysis was performed by the Rietveld method. A crystallite size was examined from the obtained diffraction spectrum. Table 1 shows a crystallite size of the active material powder in each of the examples.

<Measurement of Necking Ratio N>

For the active material powder synthesized in each of the examples, the image analysis tool ImageJ was used according to the method described in the first approach to measure a necking ratio N expressed by the relationship $(L-L_{cl})/L$ between the total perimeter L of primary particles and the sum $L_{cl}$ of perimeters of the primary particles excluding the necking sections. Further, assuming that the cross-sections of the particles of the active material are perfect circles, the average particle size D was calculated from the observed total number of particles n and the total perimeter L ($D = L/n\pi$). The results are shown in Table 1.

<Examination of Impurity Elements>

For the active material powder synthesized in each of the examples, the presence or absence of impurities into necking sections of the grain boundaries between crystallites was confirmed according to the method described in the first approach. The results are shown in Table 1.

<Evaluation of Battery Performance>

For the nonaqueous electrolyte batteries produced in Examples 1 to 4 and Comparative Examples 1 to 4, as an index of rapid discharge performance, discharge was performed at 10 C, and a discharge capacity ratio relative to 0.2 C capacity was obtained. In order to confirm that the nonaqueous electrolyte batteries could be stably charged and discharged, each of the nonaqueous electrolyte batteries was repeatedly charged and discharged for 5000 cycles (a charge and a discharge constitute one cycle), and a discharge capacity retention ratio after 5000 cycles was investigated. Repeated charge-and-discharge was performed at 45°C with a current value during charging of 10 C (hourly discharge rate) and a current value during discharge of 10 C (hourly discharge rate) in a depth of charge (DOD) range of 25% to 75%. In order to examine the discharge capacity retention ratio after 5000 times, charge-and-discharge was performed again at 0.2 C (hourly discharge rate), and a discharge capacity after 5000 times was divided by an initial discharge capacity and multiplied by 100 to calculate a capacity retention ratio (%), taking the initial discharge capacity to be 100%. This capacity retention ratio is an index of long-life performance . The above results are summarized in Table 1.

[Table 1]

|  | Crystallite size of active material (nm) | Average particle size of active material powder (μm) | Necking ratio N | Impurities into necking section of grain boundary | 10 C/0.2 C Capacity ratio (%) | Discharge capacity retention ratio after 5000 cycles (%) |
|---|---|---|---|---|---|---|
| Example 1 | 80 | 2 | 0.2 | - | 82 | 96 |
| Example 2 | 105 | 2.2 | 0.38 | - | 85 | 98 |
| Example 3 | 100 | 2.1 | 0.6 | - | 86 | 95 |
| Example 4 | 110 | 2.3 | 0.3 | P, K | 83 | 95 |
| Comparative Example 1 | 96 | 2 | 0.1 | - | 72 | 92 |
| Comparative Example 2 | 180 | 3.8 | 0.73 | P | 69 | 85 |
| Comparative Example 3 | 173 | 4 | 0.88 | K | 68 | 86 |
| Comparative Example 4 | 182 | 4 | 0.75 | - | 68 | 84 |

As shown in Table 1, in the avtive materials synthesized in Examples 1 to 4, the necking ratio N was within the range exceeding 0.1 and 0.6 or less. In contrast, the ratio N was 0.1 in Comparative Example 1, and the ratio N was higher than 0.6 in Comparative Examples 2 to 4. The nonaqueous electrolyte battery in which the active material of each of Examples 1 to 4 was used as the negative electrode showed higher rapid discharge performance (10 C/0.2 C capacity ratio) and cycle life performance (discharge capacity retention ratio after 5000 cycles) than those of the battery using the active material of each of Comparative Examples 1 to 4.

According to at least one of the approaches described above, an active material is provided. The active material contains a secondary particle containing a plurality of primary particles that contain a niobium-containing oxide. The secondary particle includes adjacent sections at which the primary particles are adjacent to each other and necking sections in which the primary particles are joined to each other. The total perimeter L of the primary particles and the sum $L_{cl}$ of perimeters of the primary particles excluding the necking sections satisfies the relationship of $0.1 < (L-L_{cl})/L \le 0.6$. According to the active material, it is possible to provide an electrode that can realize a secondary battery capable of exhibiting high output performance and excellent life performance, a secondary battery and a battery pack capable of exhibiting high output performance and excellent life performance, and a vehicle including the battery pack.

While certain approaches have been described, these approaches have been presented by way of example only, and are not intended to limit the scope of the claims. Indeed, the active material, electrode and the like described herein may be embodied in a variety of other forms; furthermore various omissions, substitutions and changes in the form of the active material, electrode and the like described herein may be made.

The present disclosure also encompasses the following approaches of active materials, electrode, secondary batteries, battery packs, and vehicles:

1. An active material comprising a secondary particle containing a plurality of primary particles containing a niobium-containing oxide,

the secondary particle comprising adjacent sections at which the primary particles are adjacent to each other and necking sections in which the primary particles are joined to each other, and
a total perimeter L of the primary particles and a sum $L_{cl}$ of perimeters of the primary particles excluding the necking sections satisfying a relationship of

$$0.1 < (L - L_{cl})/L \le 0.6.$$

2. The active material according to clause 1, wherein a crystallite size of the niobium-containing oxide is 10 nm to 300 nm, an average particle size of the primary particles is within a range of 0.5 um to 3 $\mu$m, and a grain boundary is formed between crystallites, the grain boundary containing the same niobium as that of a parent phase and one or more elements selected from the group consisting of P, K, and Fe.

3. The active material according to clause 2, wherein a concentration of the element(s) in the grain boundary is 20% or more higher than that in the parent phase.

4. An electrode comprising the active material according to any one of clauses 1 to 3.

5. The electrode according to clause 4, wherein the electrode comprises an active material-containing layer containing the active material.

6. A secondary battery comprising:

a positive electrode;
a negative electrode containing a negative electrode active material; and
an electrolyte,
the negative electrode active material comprising a secondary particle containing a plurality of primary particles containing a niobium-containing oxide, the secondary particle comprising first adjacent sections at which the primary particles are adjacent to each other and second adjacent sections at which the primary particles are in contact with each other via each interface thereof, and
a total perimeter L of the primary particles and a sum $L_{cl}$ of perimeters of the primary particles excluding the second adjacent sections satisfying a relationship of

$$0.1 \leq (L - L_{cl})/L \leq 0.6.$$

7. A battery pack comprising the secondary battery according to clause 6.

8. The battery pack according to clause 7, further comprising:

an external power distribution terminal; and
a protective circuit.

9. The battery pack according to clause 7 or 8, comprising plural of the secondary battery, the secondary batteries being electrically connected in series, in parallel, or in combination of in-series connection and in-parallel connection.

10. A vehicle comprising the battery pack according to any one of clauses 7 to 9.

11. The vehicle according to clause 10, wherein the vehicle comprises a mechanism configured to convert kinetic energy of the vehicle into regenerative energy.

**Claims**

1. An active material comprising a secondary particle (12) containing a plurality of primary particles (11) containing a niobium-containing oxide,

the secondary particle (12) comprising adjacent sections at which the primary particles (11) are adjacent to each other and necking sections (13) in which the primary particles (11) are joined to each other, and
a total perimeter L of the primary particles (11) and a sum $L_{cl}$ of perimeters of the primary particles (11) excluding the necking sections (13) satisfying a relationship of

$$0.1 < (L - L_{cl})/L \leq 0.6.$$

2. The active material according to claim 1, wherein a crystallite size of the niobium-containing oxide is 10 nm to 300 nm, an average particle size of the primary particles (11) is within a range of 0.5 um to 3 $\mu$m, and a grain boundary is formed between crystallites, the grain boundary containing the same niobium as that of a parent phase and one or more elements selected from the group consisting of P, K, and Fe.

3. The active material according to claim 2, wherein a concentration of the element(s) in the grain boundary is 20% or more higher than that in the parent phase.

4. An electrode (3) comprising the active material according to any one of claims 1 to 3.

5. The electrode (3) according to claim 4, wherein the electrode (3) comprises an active material-containing layer (3b) containing the active material.

6. A secondary battery (100) comprising:

 a positive electrode (5);
 a negative electrode (3) containing a negative electrode active material; and
 an electrolyte,
 the negative electrode active material comprising a secondary particle (12) containing a plurality of primary particles (11) containing a niobium-containing oxide, the secondary particle (12) comprising first adjacent sections at which the primary particles (11) are adjacent to each other and second adjacent sections at which the primary particles are in contact with each other via each interface thereof, and
 a total perimeter L of the primary particles (11) and a sum $L_{cl}$ of perimeters of the primary particles (11) excluding the second adjacent sections satisfying a relationship of

$$0.1 \leq (L - L_{cl})/L \leq 0.6.$$

7. A battery pack (300) comprising the secondary battery (100) according to claim 6.

8. The battery pack (300) according to claim 7, further comprising:

 an external power distribution terminal (350); and
 a protective circuit (346).

9. The battery pack (300) according to claim 7 or 8, comprising plural of the secondary battery (100), the secondary batteries (100) being electrically connected in series, in parallel, or in combination of in-series connection and in-parallel connection.

10. A vehicle (400) comprising the battery pack (300) according to any one of claims 7 to 9.

11. The vehicle (400) according to claim 10, wherein the vehicle (400) comprises a mechanism configured to convert kinetic energy of the vehicle (400) into regenerative energy.

F I G. 1

F I G. 2

FIG. 3

F I G. 4

F I G. 5

F I G. 6

F I G. 7

FIG. 8

FIG. 9

F I G. 10

300

32

33

24  200

33

23

35

34

343

346

35

33

350  342

22

31

F I G. 11

F I G. 12

F I G. 13

F I G. 14

EP 4 496 026 A2

**EP 4 496 026 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. GASPERIN**. *Journal of Solid State Chemistry*, 1984, vol. 53, 144-147